# EUROPEAN PATENT APPLICATION

(11) **EP 0 874 507 A1**
(43) Date of publication of application: **28.10.1998**
(21) Application number: 97937802.3
(22) Date of filing: 27.08.1997
(51) Int. Cl.: H04M 3/42, H04M 11/00, H04M 1/27, G06F 15/00

(54) **INFORMATION COMMUNICATION METHOD, INFORMATION COMMUNICATION EQUIPMENT AT INFORMATION COMMUNICATION CENTER, INFORMATION COMMUNICATION TERMINAL EQUIPMENT, AND MEDIUM CONTAINING INFORMATION COMMUNICATION PROGRAM RECORDED THEREON**

(30) Priority: 03.09.1996 JP 233007/96
(71) Applicant: Toyota Jidosha Kabushiki Kaisha, Toyota-shi, Aichi-ken 471-71 (JP)
(72) Inventor: KANEMITSU, Hiroyuki, Toyota Jidosha K. K., Toyota-shi, Aichi-ken 471-71 -71 (JP)
(74) Representative: Rees, Alexander Ellison
(86) International application number: JP9702975
(87) International publication number: WO9810575

(57) **Abstract**

The information communication terminal equipment waiting for processed results of an information communication system which performs asynchronous processing is informed of the sending time of the processed results and the communication cost of the system is reduced. An information service center calculates the processing time required for making retrieval in response to a retrieval request received from a vehicle (S101 and S102) and, when the processing time is longer than a specified value, disconnects the line after informing the vehicle of the long processing time and expected process completing time (S103 to S105). Then the center makes the retrieval and obtains an answer (S106). On the vehicle side, the expected process completing time is displayed upon receiving the time and the answer is obtained by reconnecting the disconnected line when the expected time comes, and then, the reception of the answer is displayed (S152 to S156).

## Description

### BACKGROUND OF THE INVENTION

### FIELD OF THE INVENTION:

The present invention relates to an information communication system and an information communication method. In particular, in this invention, a communication terminal is notified of a processing completion time and costs are reduced when information communication and request-related processing are asynchronously executed.

### DESCRIPTION OF THE RELATED ART:

An information providing system has been proposed in which various information transmission requests (searching requests) are made from vehicles via car phones to an information providing center, and the center in return sends searching results (responses) to the requesting vehicles. As for some requests, the relevant searching may take a long time to complete, and communication costs may thus increase in such a system using a telephone line when a telephone line is kept connected.

In this view, JP Laid-Open NO. Hei 4-299458, for instance, discloses an information retrieving system. In this system, searching is executed with the line open when the searching condition information sent by a terminal is light, and the results are sent back to the terminal. On the other hand, when the searching condition information contains a large amount of information, searching is executed after the line is disconnected. The line is reconnected after executing updated processing, and the result is sent to the terminal.

However, although it is possible to reduce communication costs by disconnecting and reconnecting later a telephone line, the system user in the vehicle has no idea when he will obtain a reply as it is the information providing center which reconnects the line in this system. During this time, that user may be afraid to use his car phone, and may even misunderstand the situation and believe that some trouble might have occurred.

Further, even if the user in the vehicle attempts to reconnect a telephone line to obtain a reply, he has no way of knowing if searching has been completed by then, and may not able to receive a reply on a real time basis. Conventionally, asynchronous processing causes these inconveniences.

Also, when the information providing center reconnects a line to transmit a reply, the center is charged for the transmission.

### SUMMARY OF THE INVENTION

The present invention has been conceived to overcome the above problems and aims to provide an information communication system and method performing asynchronous processing which notifies a communication terminal awaiting a processing result of an expected time when the processing result will be sent to the terminal to thereby achieve communication cost reduction.

In order to achieve the above object, according to a first aspect of the invention, there is provided an information communication method, in which an information communication terminal device and an information communication center are provided. In this method, the information communication center executes processing based on a received request sent via a telephone line from the information communication terminal device, and transmitting a processing result to the information communication terminal device. Further, the information communication center comprises
a processing time estimation step of estimating a processing time necessary to execute processing in response to a request; and
a scheduled processing completion time notifying step of notifying the information communication terminal device of scheduled processing completion time information based on the processing time estimated.

According to a second aspect, in the information communication method according to the first aspect, the information communication center further comprises
a line disconnection step of temporarily disconnecting a telephone line when the processing time necessary to execute processing in response to a request is longer than or equal to a predetermined time, and
a processing execution step of continuously executing processing while the telephone line is kept disconnected,
the scheduled processing completion time information being notified to the information communication terminal device prior to temporary disconnection of the telephone line at the scheduled processing completion time notifying step.

When it appears that the processing to be executed in response to the request will take more than a predetermined time to complete, a telephone line is once disconnected, and then reconnected after the elapse of the scheduled processing completion time so that the processing result can be sent to the information communication terminal device. With this arrangement, communication costs can be reduced.

According to a third aspect, in the information communication method according to the first aspect,
the information communication terminal device comprises a time information display step of displaying the scheduled processing completion time information notified.

The information communication terminal device is then able to know when a processing result is transmitted.

According to a fourth aspect, in the information communication method of either the second or third aspect,
the information communication terminal device further comprises an automatic calling step of automatically calling the information communication center when the scheduled processing completion time obtained based on the scheduled processing completion time information has elapsed after temporary disconnection of the telephone line.

When the information communication terminal device automatically makes a call, the communication costs involved with line reconnection and after are charged to the information communication terminal device side.

According to a fifth aspect, in the information communication method of the third aspect,
displaying of the scheduled processing completion time information is canceled at the time information display step when the processing time necessary to execute processing is judged less than or equal to a predetermined time, based on the scheduled processing completion time information notified.

That is, when a processing result becomes available in a short time, a scheduled processing completion time is not displayed so as to prevent burden due to displaying.

According to sixth aspect of the present invention, there is provided an information communication device in an information communication center. The device executes processing based on a received request sent via a telephone line from an information communication terminal device, and transmits a processing result to the information communication terminal device. The information communication device comprises
processing time estimating means for estimating a processing time necessary to execute processing in response to a request; and
scheduled processing completion time notifying means for notifying the information communication terminal device of scheduled processing completion time information based on the processing time estimated.

According to a seventh aspect, an information communication device according to the sixth aspect, further comprises
communication controlling means for temporarily disconnecting a telephone line when the processing time necessary to execute processing in response to a request is longer than or equal to a predetermined time, and
processing executing means for continuously executing processing while the telephone line is kept disconnected,
   wherein
the scheduled processing completion time notifying means supplies the scheduled processing completion time information to the information communication terminal device prior to temporary disconnection of the telephone line.

According to an eighth aspect, there is provided an information communication terminal device for sending a request for processing to an information communication center via a telephone line, and for receiving a processing result from the information communication center, comprising
receiving means for receiving scheduled processing completion time information based on a processing time necessary to execute processing in response to a request, the processing time being estimated by the information communication center.

According to a ninth aspect, in an information communication terminal device according to the eighth aspect, the processing result is received from the information communication center via the telephone line which is reconnected after temporary disconnection.

According to a tenth aspect, an information communication terminal device according to the eighth aspect comprises
scheduled processing completion time displaying means for displaying the scheduled processing completion time information notified.

With this arrangement, the communication terminal side is able to have advance knowledge of when a processing result will be transmitted.

According to an eleventh aspect, an information communication terminal device according to the eighth aspect comprises
automatic calling means for automatically calling the information communication center when a scheduled processing completion time obtained based on the scheduled processing completion time information has elapsed after temporary disconnection of the telephone line.

When the information communication terminal device automatically makes a call, communication costs involved with line reconnection and after are charged to the information communication terminal device side.

According to a twelfth aspect, in an information communication terminal device according to the tenth aspect, the scheduled processing completion time displaying means cancels displaying of the scheduled processing completion time information when the processing time necessary to execute processing is judged less than or equal to a predetermined time, based on the scheduled processing completion time information notified.

That is, when a processing result becomes available in a short time, a scheduled processing completion time is not displayed so as to prevent burden due to displaying.

According to a thirteenth, there is provided a medium recording an information communication program for executing processing based on a request sent via a telephone line from an information communication terminal device and received by a computer installed in an information communication center, and for transmitting a processing result to the information communication terminal device, comprising steps of:
estimating a processing time period necessary to execute processing in response to a request, and
supplying a scheduled processing completion time information based on the processing time estimated to the information communication terminal device.

According to a fourteenth aspect, the medium according to the thirteenth aspect further comprises steps of
temporarily disconnecting a telephone line when the processing time necessary to execute processing in response to a request is longer than or equal to a predetermined time, and
continuously executing processing while the telephone line is kept disconnected;
   wherein
the scheduled processing completion time information is notified to the information communication terminal device prior to temporary disconnection of the telephone line.

According to a fifteenth aspect, there is provided a medium recording an information communication program for sending a request for processing from a computer installed in an information communication terminal device via a telephone line, to an information communication center, and for receiving a processing result from the information communication center, comprising steps of
receiving scheduled processing completion time information obtained based on the processing time necessary to execute processing in response to a request, and
displaying the scheduled processing completion time information received,
   the processing time being estimated by the information communication center.

According to a sixteenth aspect, the information communication method according to the fifteenth aspect further comprising a step of
automatically calling the information communication center when a scheduled processing completion time obtained based on the scheduled processing completion time information has elapsed after temporary disconnection of the telephone line.

According to the above invention, because the processing time for obtaining a processing result in response to a request is estimated, the scheduled processing completion time information can be supplied to the information communication terminal device side. Thus, the information communication terminal device side can know in advance when the reply will become available. With this arrangement, it is possible to avoid mistaken belief that some trouble might have occurred because a reply has not yet been transmitted before the scheduled processing completion time. Also, when processing for a request may take more than a predetermined time, a telephone line is once disconnected, and then reconnected after a scheduled processing completion time has elapsed, so that a processing result is transmitted to the information communication terminal device side. With this arrangement, communication costs can be reduced.

### BRIEF DESCRIPTION OF THE DRAWINGS

Fig. 1 is a diagram schematically representing the entire structure of an information communication system according to a first preferred embodiment of the present invention;
Fig. 2 is a block diagram representing the structure of an communication device according to the first preferred embodiment;
Fig. 3 is a block diagram representing the structure of an information communication center according to the first preferred embodiment;
Fig. 4 is a flowchart for an information communication method according to the first preferred embodiment;
Fig. 5 is a diagram showing an example display to be shown when receiving a message telling of a shift to asynchronous processing and a scheduled processing completion time;
Fig. 6 is a diagram showing an example display to be shown when receiving a reply;
Fig. 7 is a flowchart for an information communication method according to the second preferred embodiment;
Fig. 8 is a flowchart for an information communication method according to the third preferred embodiment; and
Fig. 9 is a diagram illustrating a preferred embodiment in which an information communication system of the present invention is applied to a client server system.

### DESCRIPTION OF THE PREFERRED EMBODIMENTS

In the following, preferred embodiments of the present invention will be described referring to the accompanying drawings. Note that identical elements to those of the prior art are given the same reference numerals, and the explanation thereof will not be repeated.

### EMBODIMENT 1.

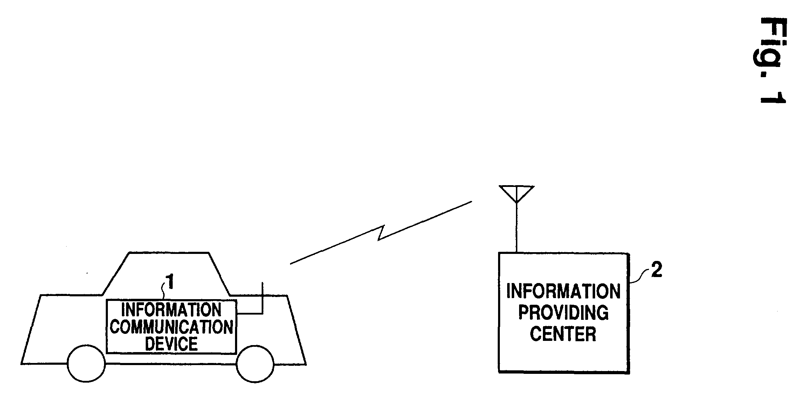

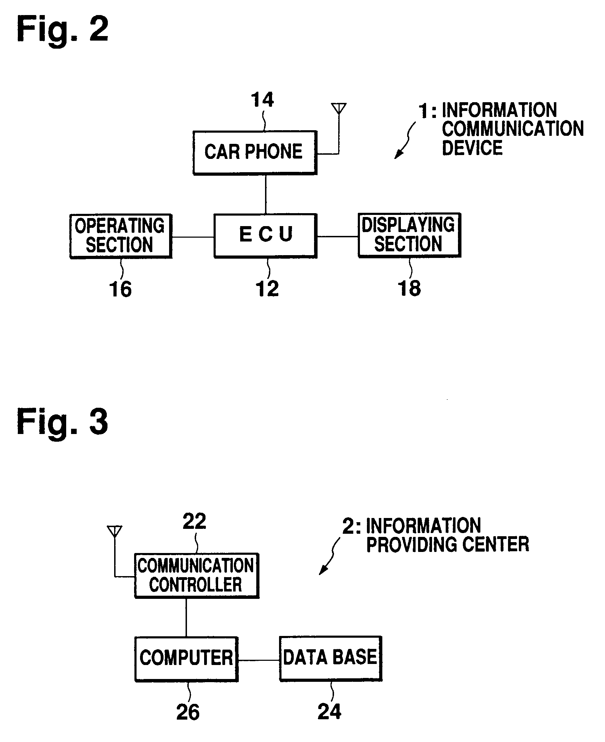

Fig. 1 is a diagram schematically showing the complete structure of an information communication system according to a first preferred embodiment of the present invention. In this embodiment, as shown in the drawing, an information communication system for providing information to vehicles will be described. Fig. 2 is a block diagram of an information communication device of Fig. 1. An information communication device 1 is a terminal device comprising an electronic control device (ECU) 12, a car phone 14, an operating section 16, and a displaying section 18. The operating section 16 requests an inquirer, or a vehicle rider, to input details of an information searching request. The displaying section 18 displays transmitted information, and so on. The displaying section 18, comprising a display, is a touch-panel type so that it can serve also as an operating section 16. The ECU 12 makes control such that an information searching request inputted via the operating section 16 is transmitted via the car phone 14 to the information providing center 2. Also, a reply to the searching request is received via the car phone 14 from the information providing center 2, and displayed on the displaying section 18. Further, the ECU 16 has processing functions utilizing the car phone 14, such as automatic call making, automatic call receiving, and forcible line disconnection. Note that a portable phone may be used instead of the car phone 14, which is connected via a connector, or such like (not shown) to the ECU 12.

Fig. 3 is a block diagram showing the structure of an information providing center 2 of Fig. 1. The information providing center 2 sends a reply in response to a searching request, or the like, sent from a vehicle-mounted information communication device 1. The information providing center 2 comprises a communication controller 22, a database 24, and a computer 26. The communication controller 22 carries out information communication with a car phone 14. The database 24 is loaded with various information to be referred to in responding to searching requests. The computer 26 has a searching request receiving function for receiving searching requests from vehicles via the communication controller 22, a searching function for executing database searching based on the content of a received searching request, and an information transmitting function for sending a searching result to the requesting vehicle to thereby reply to the searching request. The computer 26 has various further processing functions, details of which will be described later, such as estimation, through calculation, of a processing time for replying to a request, and other functions utilizing the communication controller 22, such as automatic call making, automatic call receiving, and forcible line disconnection. Those functions are characteristic features of the present invention.

This embodiment is characterized by the fact that, when the information providing center 2 receives a searching request from a vehicle, a processing time for sending a reply to the searching request is calculated, and a scheduled processing completion time is notified to the vehicle. With this, the requester on the vehicle is able to know in advance when a reply becomes available. Further, if more than a certain predetermined time period seems necessary to complete processing, a telephone line is once disconnected and then reconnected after the scheduled processing completion time has passed so as to send a processing result (reply) to the vehicle. With this arrangement, communication costs can be reduced. Note that, in this embodiment, a telephone line is used in a time-charge system, and charging for telephone use is made to the caller.

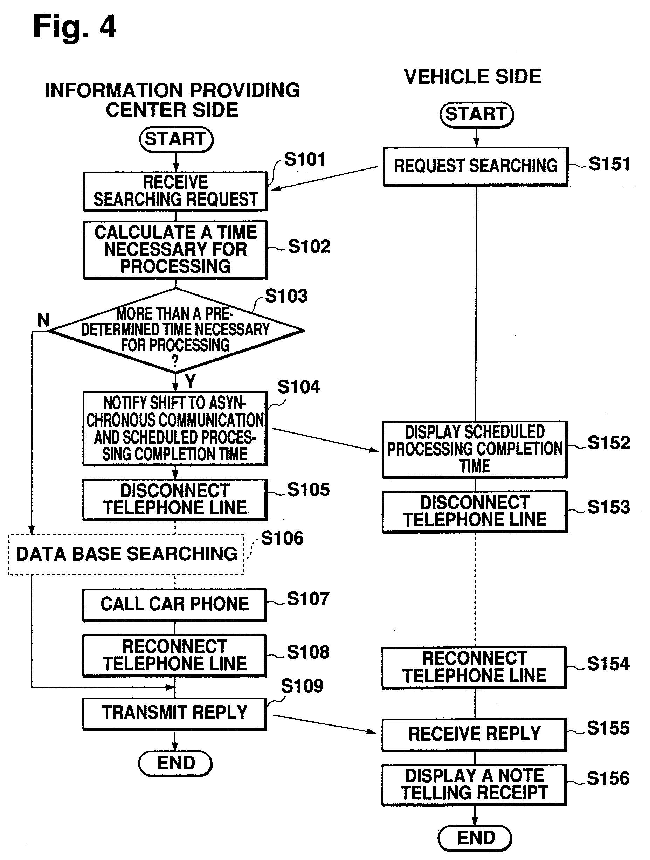

In the following, an information communication method according to this embodiment will be described, referring to the flowchart shown in Fig. 4.

On the vehicle side, when a requester inputs a searching request with respect to the information he wishes to obtain via the operating section 16, the ECU 12 transmits the request to the information providing center 2 using a car phone 14 (step 151). Note that although the ECU 12 automatically calls the information providing center to connect a telephone line before sending a searching request, this line connection process is included in a searching requesting process as it is a general procedure conventionally carried out.

At the information providing center 2, when the computer 26 receives a searching request from a vehicle via the communication controller 22 (step 101), the computer 26 analyzes the content of the request, and calculates a searching time (step 102). The searching time can be calculated by multiplying a statistical average processing time for respective processing commands included in a searching request by a burden for the information providing center 2 as a weight. As a detailed calculation method, a method disclosed in Japanese Patent Laid-open Hei No. 7-126236 by the same applicant as the present application can be referred to.

The computer 26 then judges whether or not the processing time period estimated through calculation is greater than or equal to a predetermined time period (step 103). As communication cost reduction is one object of this embodiment, the above predetermined time is desirably determined in consideration of, for instance, the length of time covered by a minimum charge or a predetermined charge. If a searching process will be completed within a predetermined processing time period, database searching is executed and a reply is sent while a telephone line is kept connected, similar to the conventional method (step 103, 106, 109). If a searching process will not be completed within a predetermined processing time period, the fact that asynchronous communication will take place and a scheduled processing completion time obtained based on the above estimated processing time period are notified to the vehicle (step 104). Then, after a telephone line is forcibly disconnected or the vehicle disconnects the telephone line (step 105. 153), database searching is carried out (step 106).

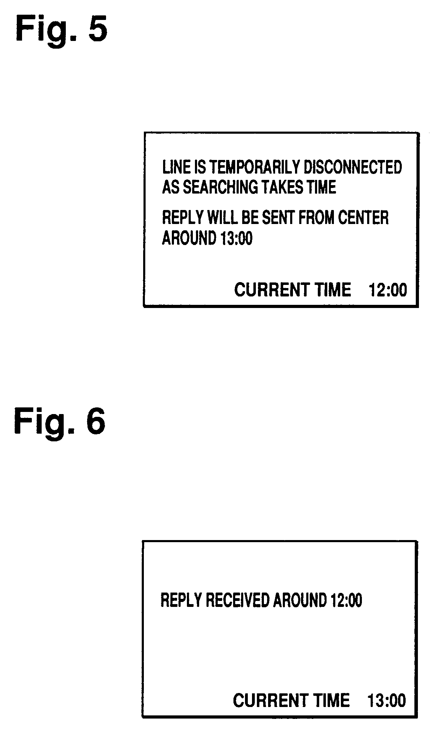

On the vehicle side, when the vehicle receives a message informing of a shift to an asynchronous communication and a scheduled processing completion time, the content thereof is shown in the displaying section 18 (step 152). Fig. 5 shows an example of such a display. Since the vehicle is informed of a scheduled processing completion time prior to temporary disconnection of a telephone line and displays that information, the requester can learn from the display that a reply will be sent at the displayed time or, in other words, that a reply will not be obtained until that time. The user will therefore be able to understand that the delay in receiving a reply is not due to some type of trouble, and will also know that he can freely use the car phone 14 until that scheduled time.

When a searching is completed at the information providing center 2, the car phone 14 of the requesting vehicle is called, and a telephone line is reconnected to thereby establish a communication before transmitting a reply (steps 107, 108, 109). The establishment of a communication mentioned above entails negotiation between modems, and mutual recognition of the state before disconnection of a telephone line. Note that an actual processing completion time should be substantially the same as the calculated scheduled processing completion time.

On the vehicle side, the vehicle receives a reply when a telephone line is reconnected by being called by the information providing center 2 (step 155). The content of the reply is shown in the displaying section 18 (step 156). Fig. 6 shows an example display. As the requester is able to know by reading the display that the reply has been transmitted, he can then refer to the contents of the reply. Note that although the telephone line between the information providing center and the vehicle is disconnected after the reply is sent, this line disconnection process is included in a reply transmission process, as it is a general conventional procedure.

As described above, according to the present invention, when an information providing center 2 receives a searching request from a vehicle, the center 2 calculates a processing time for sending a reply to the searching request, and notifies the vehicle of a scheduled processing completion time. With this arrangement, the requester can know in advance when a reply will become available. Also, if more than a predetermined time period is necessary for the processing, a telephone line is once disconnected and then reconnected after the expected processing completion time and a processing result (reply) is sent to the vehicle. This arrangement enables cost reduction.

Note that although the information providing center 2 notifies of a scheduled processing completion time as scheduled processing completion time information to a vehicle, the center 2 may inform the vehicle of a calculated processing time period so that the vehicle calculates a scheduled processing completion time. Also, although an information providing center 2 estimates a processing time based on a processing commands in the above example, a vehicle may be provided with a processing time estimation means, a communication controller, and a scheduled processing completion time notifier so that the vehicle calculates a processing time in advance.

### EMBODIMENT 2.

In the first embodiment, if a processing time period estimated based on the content of a request is greater than or equal to a predetermined time period, the computer 26 in the information providing center 2 once disconnects a telephone line, and then reconnects the line after searching the database. In the above case, communication costs for reply transmission is charged to the information providing center 2, though the information transmission request was made from the vehicle side. In this view, in this embodiment, a party making an information transmission request, i.e., a vehicle side, which should bear communication costs, is charged for the communication costs for reconnection and thereafter.

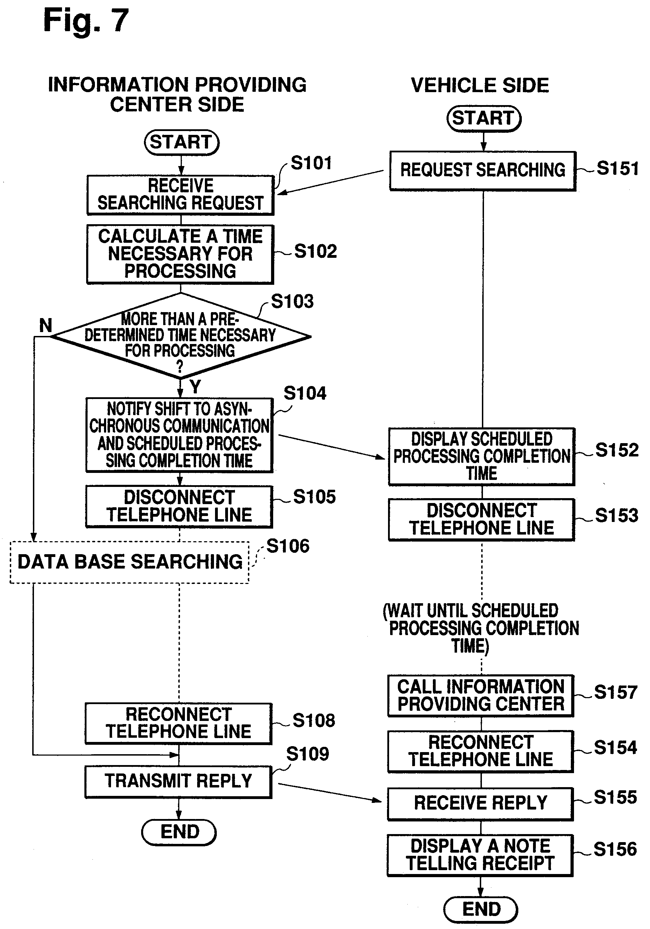

An information communication method according to this embodiment will next be described with reference to Fig. 7. Processes on a vehicle side, including request making, receiving and displaying a message from an information providing center telling of a shift to asynchronous communication and a scheduled processing completion time, and disconnecting a telephone line (steps 151 to 153) are identical to those described in the first embodiment, and their explanations will not be repeated here. In addition, processes on the information providing center side, including receiving a searching request, calculating a processing time period, notifying of a scheduled processing completion time, and so on, to the vehicle, disconnecting a telephone line (steps 101 to 105), and asynchronous database searching (step 106) are also identical to those described in the first embodiment, and their explanations will not be repeated here. In the following, therefore, only processes after notification of a scheduled processing completion time to a vehicle and temporary disconnection of a telephone line will be described.

After a vehicle receives and displays a scheduled processing completion time and a telephone line is disconnected (steps 152, 153), the vehicle waits until the scheduled processing completion time, assuming that database searching (step 106) has not yet completed. At the scheduled time, the ECU 12 on the vehicle side controls the car phone 14 to automatically call the information providing center 2 (step 157), and the telephone line is then reconnected (step 154). Note that, as an alternative to automatic call making for reconnection at step 154, an inquiry message may be displayed to query the requester whether or not line reconnection is necessary when a call for reconnection is automatically made.

By the time the vehicle reconnects a telephone link, the information providing center 2 must have completed database searching and obtained a searching result. Thus, the information providing center 2 sends the searching result (reply) to the vehicle (step 109), so that the vehicle receives the reply (step 155), and displays the content of the reply in the displaying section 18 (step 156).

As descried above, according to this embodiment, the vehicle incurs all line usage fees after reconnection of a telephone line, which is reasonable for the information providing center operating an asynchronous communication. This is possible because a scheduled processing completion time is notified to a vehicle before temporary disconnection of a telephone line so that the vehicle can know an optimum timing at which to make telephone line reconnection.

### EMBODIMENT 3.

As described in the previous embodiments, the fact that a vehicle is notified of a scheduled processing completion time by an information providing center 2 and displays the information regarding the time in a displaying section 18 is very effective. However, if such displaying is routinely conducted, it may be troublesome when, for instance, a reply can be instantly available. In this view, in this embodiment, a scheduled processing completion time is not displayed in the displaying section 18 when a processing time period obtained by calculation based on a searching request is within a predetermined time period. With this arrangement, the requester need not be bothered.

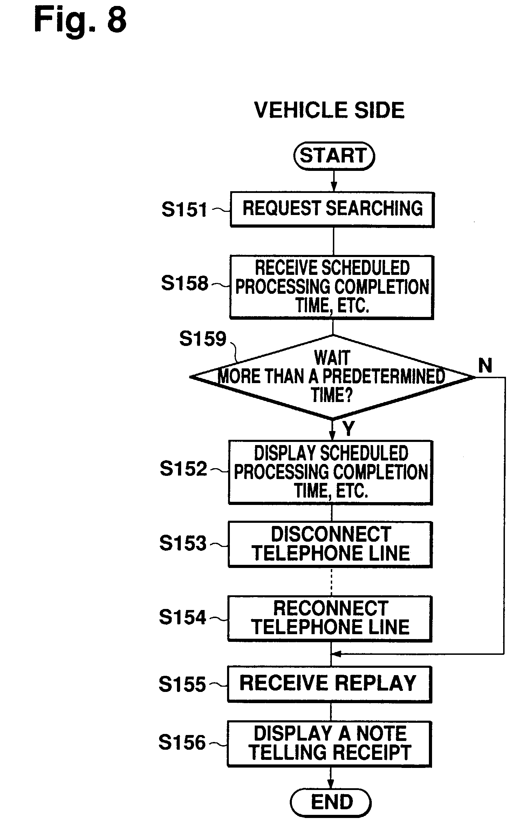

An information communication method according to this embodiment will next be described with reference to the flowchart shown in Fig. 8. Note that, as the processes on the information providing center side are identical to those described in the first embodiment shown in Fig. 4, their explanation is not repeated here.

When a vehicle makes a searching request (step 151), and receives a message telling of a shift to an asynchronous communication and a scheduled processing completion time (step 158), whether or not the scheduled processing completion time, i.e., a time period from making a searching request to receiving a reply, is more than a predetermined processing time period (step 159). As communication cost reduction is one of the objects of this embodiment, the above time period may be determined in consideration of a communication time covered by a minimum charge. Alternatively, a time period which does not make the requester feel that he has waited too long, may be set as the predetermined processing time period. If a time period before the vehicle receives a reply is more than the predetermined processing time period, identical processing to that which is described in the first embodiment will be made. That is, a message telling of a shift to asynchronous processing and a scheduled processing completion time are displayed; a telephone line is once disconnected; and a telephone line is then reconnected for receiving a reply which is then displayed (steps 152 to 156). On the other hand, if a time period before the vehicle receives a reply is within the predetermined processing time period, the vehicle waits for the reply with the telephone line kept connected without displaying a note telling of a shift to asynchronous processing and a scheduled processing completion time. When a reply is received, a report is displayed indicating that a replay has been received (steps 155, 156).

As described above, according to this embodiment, when a reply becomes available within the predetermined processing time period, a message telling of a shift to asynchronous processing and a scheduled processing completion time as shown in Fig. 5 are not displayed. With this arrangement, the searching requester is not bothered. In the above, although whether or not to display a message is decided based on the predetermined processing time period, a decision may also be based on a setting made via the operating section 16.

In this embodiment, information searching processing between a vehicle and an information providing center has been taken as an example, in which a timing at which a reply to a searching request becomes available, is notified to a vehicle by informing the vehicle of a scheduled processing completion time. However, this invention may be applied also to a system including a request making process for a reply, and so on, such as a system for simply requesting certain processing.

### EMBODIMENT 4.

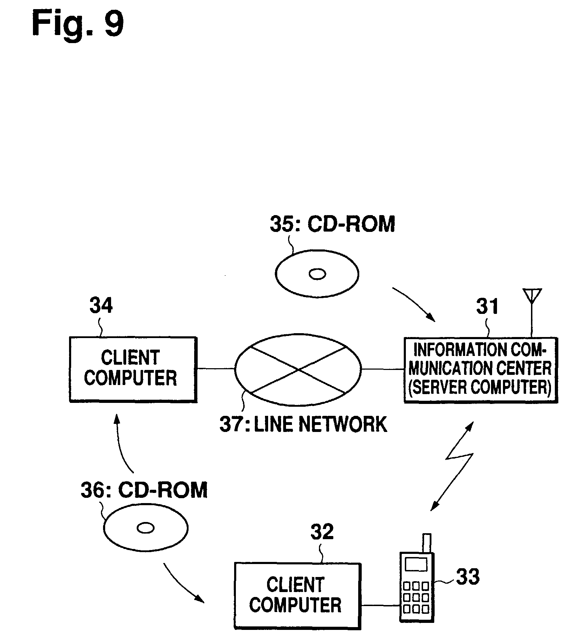

The above embodiments describe an information communication system for providing information to a vehicle. An information communication system of this invention may also be applied to a general client-server system according to a time-charge system of telephone linkage via lines or radio. Fig. 9 is a diagram showing an embodiment in which an information communication system of the present invention is applied to a client-server system. In this client-server system, a server computer 31 corresponds to an information communication device in an information communication center, while a client computer 32 and a portable phone 33 for radio communication with the server computer 31, and client computer 34 for communication with the server computer 31 via a line network 37 each correspond to an information communication terminal device. Note that, in this structure, when the client computer 32 and the portable telephone 33 are carried inside a vehicle, the identical processing operation to that described in the above embodiments is conducted despite a different hardware structure. Also, the client computer 34 performs basically identical processing to that which is described in the above respective embodiments, except that line communication is used. Thus, such an operation will not be described again.

Although, in the above respective embodiments, the computer in an information providing center and the information communication device mounted to a vehicle respectively have an information communication program installed thereto in advance, an information communication program may be supplied to the server computer 31 and the client computers 32, 34 via a media such as CD-ROM 35, 36.

The CD-ROM 35 to be supplied to the server computer 31, and the CD-ROM 36 to be supplied to the client computers 32, 34 record an information communication program for carrying out the processes described in the above respective embodiments, and the information communication program is read by a driver device (not shown) connected to the respective computers 31, 32, 34 and executed. Alternatively, an information communication program may be supplied by the server computer 31 to the respective client computers 32, 34 via a communication network, such as by means of radio or using a line network 36. In this case, a medium in which the received information communication program is written correspond to a medium relative to the present invention. Note that a medium relative to the present invention may include any conventional recordable medium, such as floppy disk, RAM, magnetic tape, DVD, etc., and is not limited to CD-ROM. The client computers 32, 34 may obviously be either desktop type or notebook personal computers, or a portable information terminal, such as a PDA.

## Claims

1. An information communication method, in which an information communication terminal device and an information communication center are provided, the information communication center executing processing based on a received request sent via a telephone line from the information communication terminal device, and transmitting a processing result to the information communication terminal device, wherein
the information communication center comprises
a processing time estimation step of estimating a processing time necessary to execute processing in response to a request; and
a scheduled processing completion time notifying step of notifying the information communication terminal device of scheduled processing completion time information based on the processing time estimated.

2. An information communication method according to claim 1, wherein
the information communication center further comprises
a line disconnection step of temporarily disconnecting a telephone line when the processing time necessary to execute processing in response to a request is longer than or equal to a predetermined time, and
a processing execution step of continuously executing processing while the telephone line is kept disconnected,
the scheduled processing completion time information being notified to the information communication terminal device prior to temporary disconnection of the telephone line at the scheduled processing completion time notifying step.

3. An information communication method according to claim 1, wherein
the information communication terminal device comprises a time information display step of displaying the scheduled processing completion time information notified.

4. An information communication method according to any one of claim 2 or 3, wherein
the information communication terminal device further comprises an automatic calling step of automatically calling the information communication center when the scheduled processing completion time obtained based on the scheduled processing completion time information has elapsed after temporary disconnection of the telephone line.

5. An information communication method according to claim 3, wherein
displaying of the scheduled processing completion time information is canceled at the time information display step when the processing time necessary to execute processing is judged less than or equal to a predetermined time, based on the scheduled processing completion time information notified.

6. An information communication device in an information communication center executing processing based on a received request sent via a telephone line from an information communication terminal device, and transmitting a processing result to the information communication terminal device, comprising:
processing time estimating means for estimating a processing time necessary to execute processing in response to a request; and
scheduled processing completion time notifying means for notifying the information communication terminal device of scheduled processing completion time information based on the processing time estimated.

7. An information communication device according to claim 6, further comprising:
communication controlling means for temporarily disconnecting a telephone line when the processing time necessary to execute processing in response to a request is longer than or equal to a predetermined time, and
processing executing means for continuously executing processing while the telephone line is kept disconnected,
wherein
the scheduled processing completion time notifying means supplies the scheduled processing completion time information to the information communication terminal device prior to temporary disconnection of the telephone line.

8. An information communication terminal device for sending a request for processing to an information communication center via a telephone line, and for receiving a processing result from the information communication center, comprising
receiving means for receiving scheduled processing completion time information based on a processing time necessary to execute processing in response to a request, the processing time being estimated by the information communication center.

9. An information communication terminal device according to claim 8, wherein
the processing result is received from the information communication center via the telephone line which is reconnected after temporary disconnection.

10. An information communication terminal device according to claim 8, further comprising
scheduled processing completion time displaying means for displaying the scheduled processing completion time information notified.

11. An information communication terminal device according to claim 8, further comprising
automatic calling means for automatically calling the information communication center when a scheduled processing completion time obtained based on the scheduled processing completion time information has elapsed after temporary disconnection of the telephone line.

12. An information communication terminal device according to claim 10, wherein
the scheduled processing completion time displaying means cancels displaying of the scheduled processing completion time information when the processing time necessary to execute processing is judged less than or equal to a predetermined time, based on the scheduled processing completion time information notified.

13. A medium recording an information communication program for executing processing based on a request sent via a telephone line from an information communication terminal device and received by a computer installed in an information communication center, and for transmitting a processing result to the information communication terminal device, comprising steps of:
estimating a processing time necessary to execute processing in response to a request, and
supplying a scheduled processing completion time information based on the processing time estimated to the information communication terminal device.

14. A medium recording an information communication program according to claim 13, further comprising steps of
temporarily disconnecting a telephone line when the processing time necessary to execute processing in response to a request is longer than or equal to a predetermined time, and
continuously executing processing while the telephone line is kept disconnected;
wherein
the scheduled processing completion time information is notified to the information communication terminal device prior to temporary disconnection of the telephone line.

15. A medium recording an information communication program for sending a request for processing from a computer installed in an information communication terminal device via a telephone line, to an information communication center, and for receiving a processing result from the information communication center, comprising steps of
receiving scheduled processing completion time information obtained based on the processing time necessary to execute processing in response to a request, and
displaying the scheduled processing completion time information received,
the processing time being estimated by the information communication center.

16. A medium recording an information communication program according to claim 15, further comprising a step of
automatically calling the information communication center when a scheduled processing completion time obtained based on the scheduled processing completion time information has elapsed after temporary disconnection of the telephone line.
